# EUROPEAN PATENT SPECIFICATION

(11) **EP 3 398 999 B1**
(45) Date of publication and mention of the grant of the patent: **16.08.2023**
(21) Application number: 18167536.4
(22) Date of filing: 16.04.2018
(51) Int. Cl.: C09D 5/00, C08K 3/00, C08K 5/00

(54) **ADDITIVE FOR PAINTS, PUTTIES, PLASTERS AND OTHER MATERIALS INTENDED TO COVER ARCHITECTURAL SURFACES**
ADDITIV FÜR FARBEN, KITTE, PUTZE UND ANDERE MATERIALIEN ZUR ABDECKUNG VON ARCHITEKTONISCHEN OBERFLÄCHEN
ADDITIF POUR PEINTURES, MASTICS, PANSEMENTS ET AUTRES MATÉRIAUX DESTINÉ À COUVRIR DES SURFACES ARCHITECTURALES

(30) Priority: 24.04.2017 IT 201700044538
(43) Date of publication of application: 07.11.2018
(73) Proprietor: Aurora S.r.l., 63074 San Benedetto del Tronto, AP (IT)
(72) Inventor: PAOLINI, Isidoro, 63074 SAN BENEDETTO DEL TRONTO AP (IT)
(74) Representative: Modiano, Micaela Nadia

(56) References cited:
- EP-A2- 2 157 070
- WO-A1-2013/020173
- US-A1- 2005 142 213
- US-A1- 2007 169 670
- US-A1- 2008 299 064

## Description

The present invention relates to an additive for paints, putties, plasters and other materials intended to cover architectural surfaces.

It is known that, after opening the seals of buckets and/or of generic containers in which ready-to-use paints, putties, plasters and/or other materials for covering architectural surfaces are stored, there is a rapid deterioration of the properties of the substance contained therein, with consequent impossibility of use after substantially short periods.

Furthermore, mildew and/or stains frequently form after the distribution on the surface to be covered (i.e. after whitewashing, painting, filling, plastering and/or generic depositing of a surface layer) of the substance of interest (paint, putty, plaster and other materials intended to cover architectural surfaces).

The onset of this type of problems is, in some cases, evident even after a very short time (for example after a few weeks, in particular in humid, north-facing areas).

Both of the problems indicated above, i.e. the rapid deterioration of the substances after the first opening of the respective container and the onset of mildew and/or stains on the covered surfaces, constitute serious problems that are difficult to resolve.

Additives are known which are based on solvents and other chemical substances, which can reduce the extent of the problems listed above. However, such conventional additives have a heavy environmental impact, as they are polluting, and therefore they cannot be applied universally. In addition, they are constituted by active ingredients that are expensive and this has an influence on the overall cost of the entire additive.

The aim of the present invention is to solve the above mentioned drawbacks by providing an additive for paints, putties, plasters and other materials intended to cover architectural surfaces that enables a prolonged conservation of these materials over time.

Within this aim, an object of the invention is to provide an additive for paints, putties, plasters and other materials intended to cover architectural surfaces that prevents the formation of mildew and/or other types of stains on the treated surfaces, i.e. on the surfaces on which layers of materials intended to cover architectural surfaces, conveniently additivated, have been distributed.

Another object of the invention is to provide an additive for paints, putties, plasters and other materials intended to cover architectural surfaces that is low cost.

Another object of the invention is to provide an additive for paints, putties, plasters and other materials intended to cover architectural surfaces that does not pollute and has a low environmental impact.

A still further object of the present invention is to provide an additive for paints, putties, plasters and other materials intended to cover architectural surfaces that is easily and practically implemented and safely applied.

This aim and these and other objects that will become better apparent hereinafter are achieved by an additive for paints, putties, plasters and other materials intended to cover architectural surfaces, characterized in that it comprises, with respect to a liter of additive:
- 500-800 mL of water,
- 200-500 mL of a substance, selected from vinegar and wine,
- 20-75 g of sodium bicarbonate, and
- 5 to 30 drops of essential oils, selected from the group cosisting of essential oil of lemon and essential oil of lavander.

Such aim and such objects are also achieved by the use of the additive according to the invention, such use consisting of:
- dilutig a paint, a putty, a plaster and/or another material intended to cover architectural surfaces by way of said additive, thus obtaining a diluted mixture constitued by paint, putty, plaster and/or other material intended to cover architectural surfaces in a percentage comprised between 10% and 90%, and by said additive in a percentage comprised between 90% and 10%.

Further characteristics and advantages of the invention will become better apparent from the detailed description that follows of a preferred, but not exclusive, embodiment of the additive for paints, putties, plasters and other materials intended to cover architectural surfaces according to the invention, which is illustrated by way of non-limiting example in the accompanying drawings, wherein:
Figure 1 is a schematic perspective view of the method of providing an additive according to the invention;
Figure 2 is a schematic perspective view of the method of diluting a paint, a putty, a plaster or another material intended to cover architectural surfaces, with the additive according to the invention;
Figure 3 is a schematic perspective view of a possible mode of application of an additive according to the invention;
Figure 4 is a schematic perspective view of a possible mode of application of a mixture constituted by an additive according to the invention and by a paint, a putty, a plaster or another material intended to cover architectural surfaces.

With reference to the figures, the reference numeral 1 generally designates an additive for paints 2, putties, plasters and other materials intended to cover architectural surfaces.

The additive 1 according to the invention comprises with respect to a liter of additive 1:
- 500-800 mL of water 3,
- 200-500 mL of a substance 4, selected from vinegar and wine,
- 20-75 g of sodium bicarbonate 5, and
- 5 to 30 drops of essential oils 6, selected from the group consisting of essential oil of lemon and essential oil of lavender.

The purpose of the esential oils 6 is confer a plesing and fresh odor on the additive 1, which is particularly confer of a pleasing and in the operations of finishing and treatment of architectural surfaces.

With particular reference to a possible version of the additive 1 according to the invention, which makes it possible to substantially eliminate the formation of mildew and/or stains on the architectural surfaces treated with covering materials conveniently mixed with the additive 1, such additive 1 preferably comprises, with respect to one liter of compound overall, between 600 ml and 700 ml of water 3.

A possible embodiment of undoubted practical interest, relating to the example just indicated above, entails using approximately 660 ml of water 3 in a liter of the specific version of additive 1 according to the invention.

With reference to the possible version of the additive 1 described previously, such additive 1 preferably comprises, with respect to a liter of compound, between 300 ml and 400 ml of a substance 4 selected from vinegar and wine.

A possible embodiment of undoubted practical interest, relating to the example just indicated above, entails using approximately 330 ml of a substance 4 selected from vinegar and wine in a liter of the specific version of additive 1 according to the invention.

With reference to the possible version of the additive 1 described previously, such additive 1 preferably comprises, with respect to a liter of compound, between 40 g and 60 g of sodium bicarbonate.

A possible embodiment of undoubted practical interest, relating to the example just indicated above, entails using approximately 50 g of sodium bicarbonate 5 in a liter of the specific version of additive 1 according to the invention.

With reference to the possible version of the additive 1 described previously, such additive 1 preferably comprises, with respect to a liter of compound, between 10 drops and 15 drops ,of essential oil of lavender, and between 10 drops and 15 drops of essential oil of lemon.

A possible embodiment of undoubted practical interest, relating to the example just indicated above, entails using approximately 12 drops of essential oil of lemon and approximately 12 drops of essential oil of lavender in a liter of the specific version of additive 1 according to the invention.

The present invention also extends its scope of protection to the use of the additive 1 described previously, which consists of diluting a paint 2, a putty, a plaster and/or another material intended to cover architectural surfaces by way of such additive 1, thus obtaining a diluted mixture 7 constituted by paint 2, putty, plaster and/or other material intended to cover architectural surfaces in a percentage comprised between 10% and 90%, and by the additive 1 in a percentage comprised between 90% and 10%.

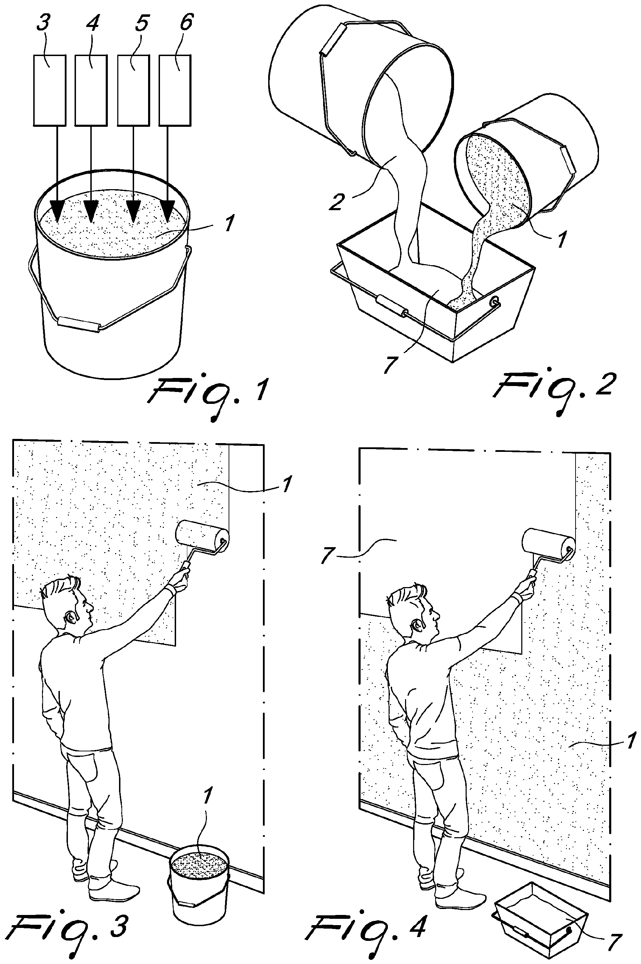

Similarly the present invention also extends its scope of protection to the use of a compound for treating architectural surfaces of the type described previously which consists of distributing the compound (which effectively coincides with one of the possible formulations of the additive 1) on the architectural surface to be treated (as illustrated schematically in Figure 3), prior to any operations of painting, whitewashing (as illustrated schematically in Figure 4), filling and the like, by way of a distribution of a type that is selected from directly, with brushes, rollers, pads, sponges and the like, and indirectly, with spray dispensing by way of adapted nozzles.

Subsequently to this pre-treatment, the distribution of the mixture 7 (constituted by paint 2, putty and/or other covering material with the additive 1 according to the invention added) on the architectural surface can be carried out, in order to complete the finishing treatment.

Advantageously the present invention solves the above mentioned problems, by providing an additive 1 for paints 2, putties, plasters and other materials intended to cover architectural surfaces that enables a prolonged conservation of these materials over time.

In fact the mixture 7 (constituted by paint 2, putty and/or other covering material with the additive 1 according to the invention added) keeps its characteristics constant for prolonged times even if exposed to the atmosphere and therefore it can be used even a number of weeks or months after its preparation.

Such result is obtained by virtue of the strong stabilizing and preserving action generated by the additive 1 according to the invention.

Positively the additive 1 for paints 2, putties, plasters and other materials intended to cover architectural surfaces that prevents the formation of mildew and/or other types of stains on the treated surfaces, i.e. on the surfaces on which layers of mixture 7 have been distributed (optionally also carrying out a pre-treatment consisting of the direct distribution of the additive on the architectural surface to be treated).

The result is obtainable on any architectural surface, external or internal to a building.

Carrying out the pre-treatment alone makes it possible to guard against the formation of mildew, although best results are obtained by virtue of the synergistic effect of a pre-treatment with the additive 1 plus a subsequent distribution of the mixture 7 (constituted by paint 2, putty and/or other covering material additivated with the additive 1 according to the invention).

Positively the additive 1 according to the invention is low cost.

Advantageously the additive 1 according to the invention is non-polluting and has a low environmental impact, by virtue of the fact that it is made using natural and non-polluting raw materials.

Positively the additive 1 according to the invention for paints 2, putties, plasters and other materials intended to cover architectural surfaces is easily and practically implemented, i.e. this makes it a technical innovation that is safely applied.

The invention thus conceived is susceptible of numerous modifications and variations, all of which are within the scope of the appended claims. Moreover, all the details may be substituted by other, technically equivalent elements.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

The disclosures in Italian Patent Application No. 102017000044538 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An additive for paints (2), putties, plasters and other materials intended to cover architectural surfaces, **characterized in that** it comprises, with respect to a liter of additive:
- 500-800 mL of water (3),
- 200-500 mL of a substance (4), selected from vinegar and wine,
- 20-75 g of sodium bicarbonate (5), and
- 5 to 30 drops of essential oils (6), selected from the group consisting of essential oil of lemon and essential oil of lavender.

2. The additive according to claim 1, **characterized in that** with respect to a liter of additive, it comprises between 300 ml and 400 ml of a substance (4) selected from vinegar and wine.

3. The additive according to claim 1, **characterized in that** with respect to one liter of additive, it comprises between 40 g and 60 g of sodium bicarbonate (5).

4. The additive according to claim 1, **characterized in that** with respect to a liter of additive, it comprises between 10 drops and 15 drops of essential oil of lavender, and comprises between 10 drops and 15 drops of essential oil of lemon.

5. The additive according to claim 1, **characterized in that** with respect to a liter of additive, it comprises 12 drops of essential oil of lavender, and 12 drops of essential oil of lemon.

6. The use of an additive according to one of claims 1 to 5, which consists of:
- diluting a paint, a putty, a plaster and/or another material intended to cover architectural surfaces by way of said additive, thus obtaining a diluted mixture (7) constituted by paint (2), putty, plaster and/or other material intended to cover architectural surfaces in a percentage comprised between 10% and 90%, and by said additive in a percentage comprised between 90% and 10%.

## Patentansprüche

1. Ein Zusatzstoff für Anstriche (2), Kitts, Mörtel und andere Materialien, die dazu bestimmt sind, architektonische Oberflächen zu bedecken; **dadurch gekennzeichnet, dass** er, bezogen auf einen Liter Zusatzstoff, Folgendes umfasst:
- 500-800 ml Wasser (3),
- 200-500 ml einer Substanz (4), gewählt aus Essig und Wein,
- 20-75 g Natriumbicarbonat (5) und
- 5 bis 30 Tropfen ätherische Öle (6), gewählt aus der Gruppe bestehend aus ätherischem Zitronenöl und ätherischem Lavendelöl.

2. Der Zusatzstoff gemäß Anspruch 1, **dadurch gekennzeichnet, dass** er mit Bezug auf einen Liter Zusatzstoff zwischen 300ml und 400 ml einer Substanz (4), gewählt aus Essig und Wein, umfasst.

3. Der Zusatzstoff gemäß Anspruch 1, **dadurch gekennzeichnet, dass** er mit Bezug auf einen Liter Zusatzstoff zwischen 40 g und 60 g Natriumbicarbonat (5) umfasst.

4. Der Zusatzstoff gemäß Anspruch 1, **dadurch gekennzeichnet, dass** er mit Bezug auf einen Liter Zusatzstoff zwischen 10 und 15 Tropfen ätherisches Lavendelöl und zwischen 10 und 15 Tropfen ätherisches Zitronenöl umfasst.

5. Der Zusatzstoff gemäß Anspruch 1, **dadurch gekennzeichnet, dass** er mit Bezug auf einen Liter Zusatzstoff 12 Tropfen ätherisches Lavendelöl und 12 Tropfen ätherisches Zitronenöl umfasst.

6. Die Verwendung eines Zusatzstoffs gemäß einem der Ansprüche 1 bis 5, die in Folgendem besteht:
- dem Verdünnen eines Anstrichs, Kitts, Mörtels und/oder anderen Materials, das dazu bestimmt ist, architektonische Oberflächen zu bedecken, mit Hilfe des Zusatzstoffs, wodurch eine verdünnte Mischung (7) gewonnen wird, die zu einem Prozentsatz zwischen 10% und 90% aus Anstrich (2), Kitt, Mörtel und/oder anderem Material besteht, das dazu bestimmt ist, architektonische Oberflächen zu bedecken, und zu einem Prozentsatz zwischen 90% und 10% aus dem Zusatzstoff.

## Revendications

1. Additif pour des peintures (2), des mastics, des plâtres et d'autres matériaux destinés à couvrir des surfaces architecturales, **caractérisé en ce qu'**il comprend, par rapport à un litre d'additif :
- 500 à 800 ml d'eau (3),
- 200 à 500 ml d'une substance (4), sélectionnée parmi du vinaigre et du vin,
- 20 à 75 g de bicarbonate de soude (5), et
- 5 à 30 gouttes d'huiles essentielles (6), sélectionnées dans le groupe constitué d'huile essentielle de citron et d'huile essentielle de lavande.

2. Additif selon la revendication 1, **caractérisé en ce que** par rapport à un litre d'additif, il comprend entre 300 ml et 400 ml d'une substance (4) sélectionnée parmi du vinaigre et du vin.

3. Additif selon la revendication 1, **caractérisé en ce que** par rapport à un litre d'additif, il comprend entre 40 g et 60 g de bicarbonate de soude (5).

4. Additif selon la revendication 1, **caractérisé en ce que** par rapport à un litre d'additif, il comprend entre 10 gouttes et 15 gouttes d'huile essentielle de lavande, et comprend entre 10 gouttes et 15 gouttes d'huile essentielle de citron.

5. Additif selon la revendication 1, **caractérisé en ce que** par rapport à un litre d'additif, il comprend 12 gouttes d'huile essentielle de lavande, et 12 gouttes d'huile essentielle de citron.

6. Utilisation d'un additif selon l'une des revendications 1 à 5, qui consiste à :
- diluer une peinture, un mastic, un plâtre et/ou un autre matériau destiné à couvrir des surfaces architecturales au moyen dudit additif, obtenant par conséquent un mélange dilué (7) constitué de peinture (2), de mastic, de plâtre et/ou d'un autre matériau destiné à couvrir des surfaces architecturales en un pourcentage compris entre 10 % et 90 %, et dudit additif en un pourcentage compris entre 90 % et 10 %.
